# EUROPEAN PATENT APPLICATION

(11) **EP 0 972 670 A2**
(43) Date of publication of application: **19.01.2000**
(21) Application number: 99305668.8
(22) Date of filing: 16.07.1999
(51) Int. Cl.: B60N 2/00

(54) **Position determining system**

(30) Priority: 17.07.1998 GB 9815653
(71) Applicant: A B AUTOMOTIVE ELECTRONICS LIMITED, Whitchurch, Cardiff CF4 7YS (GB)
(72) Inventor: Moon, Anthony, Llandaff, Cardiff CF5 2QH (GB)
(74) Representative: Midgley, Jonathan Lee

(57) **Abstract**

A position determining system for determining and storing the position of an adjustable element, such as a seat, mirror or steering column in a vehicle. A series of irregularly spaced reference marks or holes is provided. Sensor means 60 are provided for sensing the marks or holes as they are crossed during movement of the adjustable element. The sensor provides signals to a microcontroller which determines the distance between the reference marks or holes crossed during movement of the adjustable element, thereby determining the position of the adjustable element. The position can be stored and retrieved for future use.

## Description

This invention relates to a system for determining the position of position adjustable components, such as the seats, steering column or mirrors of a motor vehicle and, in particular, to a system which can quickly and accurately determine and, optionally, memorise the position of such elements for a number of different users or requirements.

It is relatively well known to provide a memory system as a feature of luxury cars. Such systems may be used to memorise the position of the adjustable seats, mirrors, steering column, etc. Different combinations of the positions of each of these elements can be stored for different users of a particular car.

Adjustment of the seats, mirrors, steering column, etc. in a car having such a memory system is carried out by means of motors. Each motor is coupled to a rotary resistive potentiometer, the resistance of which changes as a function of movement of the element being adjusted. Thus, for example, the resistance of each rotary resistive potentiometer changes as a seat moves along its track or a mirror is rotated into the required position. The actual resistance of each potentiometer is indicative of the absolute position of the associated motor, and therefore the position of the seat or mirror.

A microcontroller receives and stores the positional information for a particular occupant and, when a particular combination of positions is required again, it sends signals to each of the motors causing them to move the seat, mirror or steering column to the stored position. In some cases, means are provided for sensing the insertion of a particular user's key in the door or ignition of a vehicle, or recognising a user's remote key, so that that user's stored combination of positions is identified and the seat, steering column, mirror, etc. are automatically adjusted accordingly. Another function which can be provided by such systems is to sense the insertion of a key in the lock of a vehicle, or remote key activation, in response to which the seat is automatically moved back to allow easier access to the vehicle, and then returned to its original position.

However, such systems which use rotary resistive potentiometers are generally expensive and, therefore, not widely provided in any vehicles except luxury vehicles.

It is possible to determine the position of a motor without the need for a rotary resistive potentiometer. For example, Hall or optical sensors can be mounted on the output shaft of each motor or associated gearbox. Such sensors produce a pulse train as the motor rotates, a fixed number of pulses being produced for each revolution of the motor. Alternatively, it is possible to determine the motor position by measuring the supply voltage and the current drawn by the motor as it rotates. Due to changes in inductance as the motor rotates, the current changes with a regular pattern which is dependent upon its angular position. This method requires no additional harnessing to the motor, but it does require a microcontroller to make frequent measurements of the voltage and current drawn by the motor at any given time, and to count the revolutions made by the motor in accordance with the resulting signal pattern.

The methods described above are less expensive to implement than the rotary resistive potentiometer system previously described, but they often give rise to small errors. For example, when the motor stops, it can recoil, i.e. move backwards slightly due to elasticity in the mechanism. In the case of the single phase counting system for position determination using Hall or optical sensors, information relating to the direction of movement of the motor is not taken into account, and errors in position determination can result. In the method of estimating the number of revolutions made by the motor by measuring ripples in the current waveform, pulses or ripples are occasionally missed, especially when the motor is started or stopped, which can again result in errors in position determination. Over a period of time, such errors accumulate, and the system then becomes unacceptably inaccurate.

In order to overcome this problem, it is necessary to periodically recalibrate the seat or other adjustable element, such that the progressive errors described above becomes insignificant. One method of achieving such recalibration is to drive the motor to each end of its travel and estimate the number of motor revolutions between the two ends of travel. However, in the case of adjustable elements such as seats and mirrors, which are highly visible, this is obviously an unsatisfactory method to use. Furthermore, if the seat or mirror must be driven to each end of its travel every time it is adjusted, adjustment becomes time consuming and inefficient.

We have now devised a system which overcomes the problems outlined above, and provides a position memory system which is accurate and relatively inexpensive.

In accordance with the present invention, there is provided a position determining system for determining the position of an adjustable element, the system comprising means for adjusting said adjustable element, a plurality of reference points, at least one of said reference points being uniquely identifiable, and means for sensing one or more of the reference points and thereby determining the position of said adjustable element.

Also in accordance with the present invention, there is provided a method of determining the position of an adjustable element, the method comprising the steps of adjusting said adjustable element, providing a plurality of reference points, at least one of said reference points being uniquely identifiable, sensing one or more of the reference points and thereby determining the position of said adjustable element.

Many different ways of providing uniquely identifiable reference points are envisaged. For example, reference points of different colours, size or shape could be provided. However, in a preferred embodiment of the present invention, a series of reference marks, such as raised bumps, or holes are provided which are irregularly spaced. In other words, the distance between each reference mark or hole is different. Thus, by measuring the distance between two successive reference marks or holes, each reference hole or mark can be identified uniquely.

The reference marks or holes may be provided on the element to be adjusted, so that the series of reference marks or holes move with the adjustable element. Means for sensing the marks or holes would then be mounted in a fixed position. Alternatively, however, the reference marks or holes may be formed on or in a track which is mounted in a fixed position relative to the adjustable element. The sensor means would then be provided on the adjustable element for movement therewith relative to the track.

In the case where movement of the adjustable element is linear, it is preferred to provide a substantially linear series of reference marks or holes. However, if the movement of the adjustable element is rotary, then the reference marks or holes are preferably provided in a substantially circular formation. Thus, for example, in the case where the adjustable element is a seat in a vehicle, and the movement of the seat is the fore and aft movement (i.e. backwards and forwards relative to the front of the vehicle), the reference marks or holes would be provided in a substantially linear formation, preferably on or in a track which runs substantially parallel to the underside of the seat. However, in the case of the reclining operation of the seat, which involves rotary movement, the reference marks or holes are preferably in a circular formation substantially parallel to the plane of rotation. Again, the reference marks or holes may either by provided in a fixed position on the rotary mechanism, with the sensor being mounted on the moving part of the rotary mechanism for movement with the seat, or vice versa.

In the embodiment whereby the reference marks or holes are irregularly spaced, the system preferably comprises a microcontroller which includes non-volatile memory means which stores the location of the adjustable element after each movement thereof. The microcontroller also stores the location of all of the reference points and can compute the distance between any pair. If a movement is made which crosses two or more reference marks or holes, the microcontroller determines the distance between the crossed marks or holes, thereby determining the position of said adjustable element. However, if only a single reference marks or hole is crossed during a movement of the adjustable element, the position of the element is determined using the previously stored position and information regarding the direction of movement. In the case where two or more reference marks are crossed during a movement, the microcontroller can also cross-check the accuracy and validity of the newly determined position using the previously stored position and information regarding the direction of movement. It is also envisaged to use the above-described method for initial calibration.

The microcontroller has a means of measuring the position approximately that is prone to small errors. By using this approximate method to determine position, combined with irregularly spaced reference points, the microcontroller can uniquely identify any particular reference point by approximate measurements of the distance between any two reference points, and can combine this with approximate distance measurements to move the moving part to any particular location. Many different methods of sensing the reference points are envisaged. In one preferred embodiment of the present invention, capacitive sensing means may be provided. In such sensing means, the capacitance between a small plate (the sensing element) and ground is measured. The ground consists of the track over which the sensing element moves. The plate and ground track form a simple parallel plate capacitor. Electronics are provided which measure the capacitance between the plate and ground by passing an AC signal through the capacitor. As the small plate sensing element passes over a reference mark or hole in the track, the capacitance decreases and the electronics senses the change accordingly. In an alternative embodiment, a steel track carrying the reference marks or holes may be provided. In this case, the sensing element comprises a small coil, the inductance of which changes as it passes over a reference mark or hole, and the electronics sense the change of inductance accordingly.

A person skilled in the art would appreciate that many other sensing means and methods could be used, according to design requirements.

It will be appreciated that the adjustable element may be any component which can be adjusted. For example, in a vehicle, the adjustable element may be a seat (which is capable of both linear and rotary motion), a mirror, a seat head rest, a steering column, etc.

Means, for example a motor and gearbox arrangement, are preferably provided for automatically moving the adjustable element.

A mirror of a vehicle can often be adjusted in more than one plane, as can the steering column. The present invention can be adapted for use with all adjustment planes.

It is also envisaged that the present invention could be used to determine the position of computer joysticks, in a vehicle or otherwise, which might replace conventional controls.

An embodiment of the present invention will now be described by way of example only and with reference to the accompanying drawings, in which:
Figure 1 is a schematic side view of a car seat which indicates the typical points of adjustment thereof;
Figure 2 is a schematic side view of the car seat of Figure 1, showing the fore and aft movement mechanism thereof;
Figure 3 is a schematic bottom view of the track along which the car seat of Figure 1 moves;
Figure 4 is a schematic diagram indicating the irregular spacing of the reference points on the track of Figure 3.
Figure 5 is a schematic front view of the car seat of Figure 1, showing the fore and aft movement mechanism in detail;
Figure 6 is a schematic diagram of the fore and aft movement mechanism;
Figure 7 is a schematic side view of the seat of Figure 1, showing the reclining mechanism in more detail;
Figure 8 is a schematic side view of the seat of Figure 1, showing the seat up/down mechanism in more detail;
Figure 9 is a schematic front view of the headrest of the seat of Figure 1, showing the headrest movement mechanism in more detail.
Figure 10 is a schematic side view of a mechanism for automatically adjusting the up/down position of a wing mirror on a vehicle;
Figure 11 is a schematic front view of a mechanism for automatically adjusting the left/right position of a wing mirror on a vehicle; and
Figure 12 is a schematic view of a rack and pinion arrangement used in the mechanisms of Figure 10 and Figure 11.

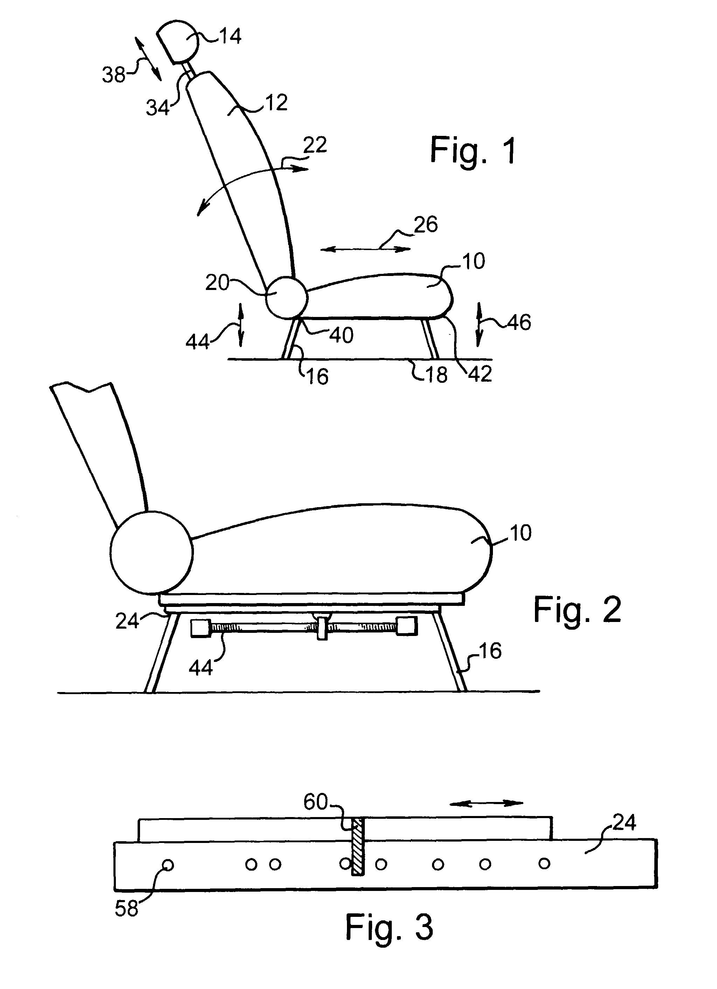

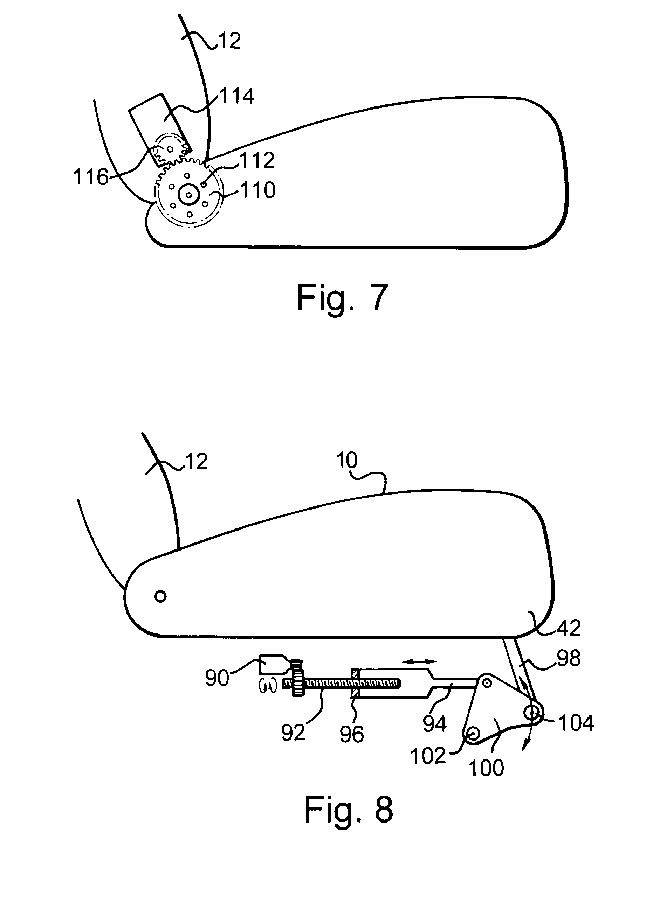

Referring to Figure 1 of the drawings, a car seat comprises a cushioned seat 10 and back 12 having a padded headrest 14 mounted at the upper end thereof. The car seat is mounted on a base 16 which is fixed to the floor 18 of the car. The lower edge of the back 12 is rotatably mounted at 20 to the rear edge of the seat 10, the angle between the back 12 and the seat 10 being adjustable according to individual requirements, as shown by the arrows at 22, by means of a reclining mechanism (see Figure 7) which will be described in more detail later.

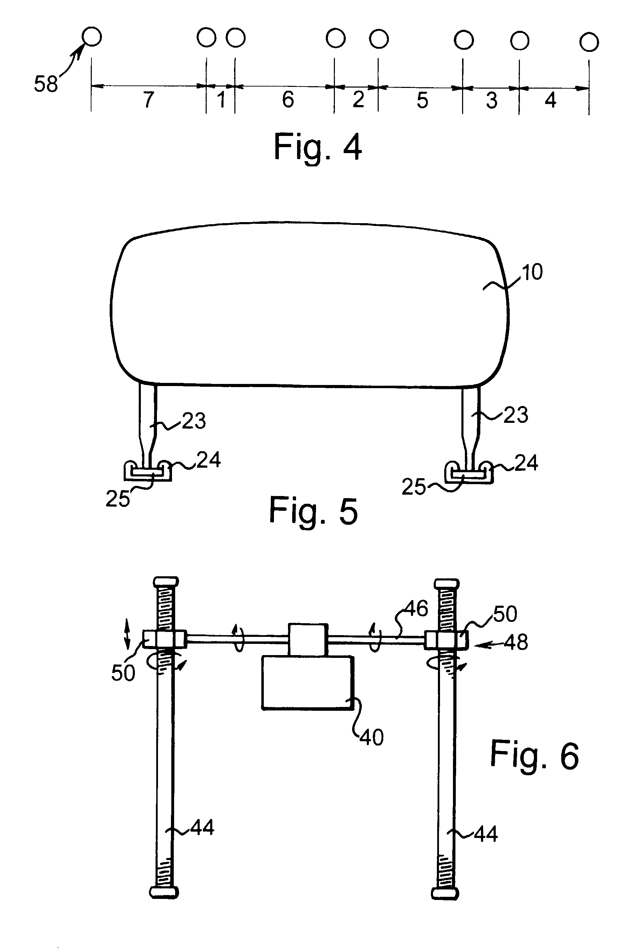

Referring to Figures 2 and 5 of the drawings, sliding parts 23 are mounted on the underside of the seat so as to extend substantially vertically therefrom. The lower end of each of the sliding parts 23 is provided with a runner 25, the runner preferably being formed of plastic to minimise friction. Each sliding part 23 is mounted in a groove or track 24 on the base 16. It will be appreciated that when the car seat is adjusted backwards or forwards (relative to the front of the car), as indicated by the arrows at 26 (Figure 1), the sliding parts run backwards and forwards along the track 24 which acts as a guide for the seat as it moves backwards and forwards as required. The track is provided with a plurality of irregularly spaced reference marks 58 (see Figure 4) which may be formed by punching holes therein. A sensor 60 (see Figure 3) is provided on the seat 10 for movement therewith such that the sensor 60 can sense the holes in the track 24.

Referring to Figures 2 and 6 of the drawings, a motor and primary gearbox 40 are mounted to the underside of the seat 10 between two fixed non-rotating lead screws 44, which are fixed in the fore/aft direction on each side of the seat, and in this embodiment are attached to the floor of the vehicle.

The motor and gearbox 40 drive an output shaft 46 cooperating with a secondary gearbox 48 so as to drive a rotating nut 50 mounted on each of the fixed, non-rotating lead screws 44. The motor, gearbox and output shafts are attached to the seat in this embodiment. In operation, the rotating nuts 50 are driven by the output shaft 48 of the motor 40 such that they move along the fixed screws 44, the direction of movement being dependent on the direction of rotation of the output shaft 46. As the nuts 50 move backwards and forwards along the screws 44, the seat 10 moves backwards and forwards with them, such that its position can be adjusted according to user requirements.

Referring now in particular to Figures 3 and 4 of the drawings, one example of the possible spacing of the reference marks 58 is shown. In this example, a series of eight reference holes 58 are provided in a substantially straight line, the relative spacing between the holes 58 being as indicated. In the example shown, the maximum error in measuring distance is 1 part in 8, with a maximum spacing of 7 units between two successive reference marks or holes. For the avoidance of doubt, a unit may be any length depending upon design requirements and the size and nature of the element being adjusted.

When the seat is adjusted, the sensor senses the reference marks or holes which it passes during the movement. If two or more successive reference marks or holes are passed, the microcontroller (not shown) measures the distance between the last two reference holes or marks passed so as to identify the position of the seat. If only one reference hole is passed (or no reference holes are passed during an adjustment), the microcontroller, which includes a non-volatile memory in which the previous position of the seat is stored, can identify the new position of the seat using the previous position of the seat and information relating to the direction of movement of the seat. Obviously, this information can also be used to cross check the position determination if two or more reference marks or holes are passed during the course of a movement.

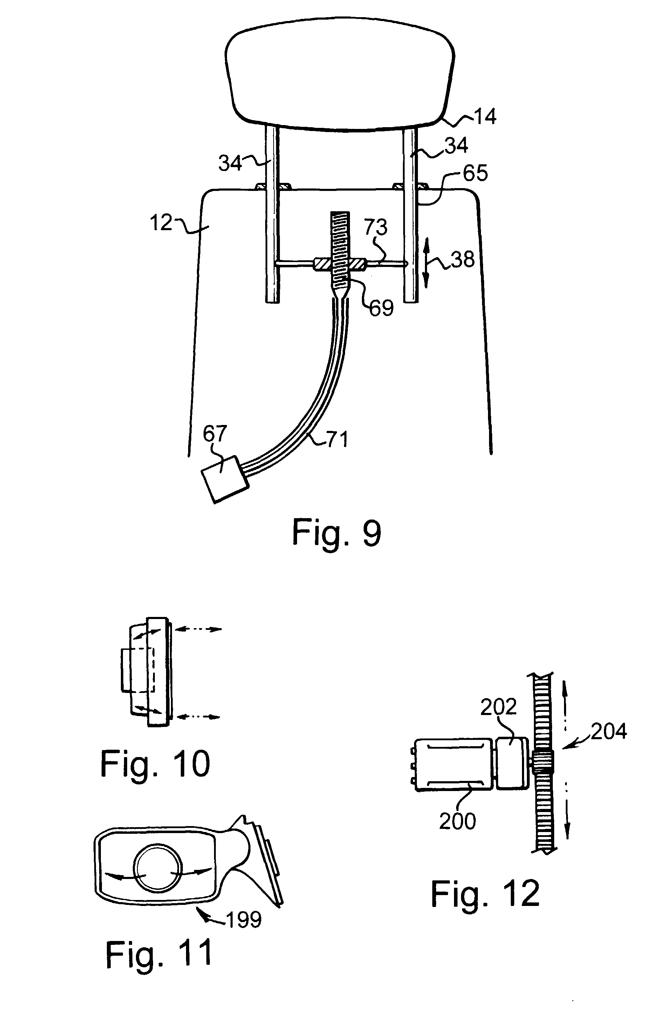

Referring back to Figure 1, the headrest 14 is mounted by means of two elongate members 34 at the upper end of the back 12. Referring to Figure 9 of the drawings, substantially vertical guide grooves 65 are provided in the seat back 12, the elongate support members 34 being retained in the grooves 65 for up/down movement therealong. The headrest 14 can be moved up and down relative to the back 12, as shown by the arrows at 38, by sliding the member 34 further out of or further into the grooves 65 in the back 12.

Movement of the headrest 14 is once again controlled by a motor and gearbox arrangement 67 which is connected to a single lead screw 69 by means of a flexible cable 71. Operation of the motor and gearbox arrangement 67 causes rotation of the cable 71 and corresponding rotation of the lead screw 69. A fixed nut 73 is provided between the support members 34, the nut 73 being attached to the support members 34, as shown. The thread of the screw 69 cooperates with the inner thread of the nut 73 such that rotation of the screw 69 causes up/down movement of the nut 73 and, therefore, corresponding movement of the headrest 14.

In this case, a series of reference marks or holes may be provided along the elongate support members 34, with sensors (not shown) being provided on or adjacent to the external guide elements 75. The determination of the position of the headrest after adjustments is once again performed by determining the distance between two successive reference holes or marks or using information relating to the previously stored position and the direction of movement, in the case where only one reference mark or hole or no reference holes or marks are passed during a single adjustment.

Both the rear edge 40 and the front edge 42 of the seat 10 can be raised or lowered according to user requirements, as indicated by the arrows at 44 and 46. Only the mechanism for raising and lowering the front edge 42 of the seat 10 is shown in Figure 8 of the drawings, but it will be appreciated that a similar mechanism may be provided to raise and lower the rear edge 40.

Referring to Figure 8 of the drawings, a mechanism for raising and lowering the front edge 42 of the seat 10 is shown. The mechanism is driven by a motor and gearbox 90 which drives a rotating lead screw 92. The lead screw 92 is coupled to a shaft 94 via nut 96. A support member 98 is mounted to the underside of the seat 10, and a generally triangular pivot plate 100 is rotatably mounted at one corner thereof to the lower end of the support member 98. The shaft 94 is attached to another corner of the pivot plate 100. The third corner of the pivot plate 100 is pivotably mounted in a fixed position within the vehicle.

Reference holes or marks (not shown) may be provided either in shaft 94 or in the pivot plate 100. The sensor (not shown) would accordingly be mounted in a convenient position to sense the reference marks or holes.

Operation of the motor and gearbox arrangement 90 causes the lead screw to rotate. Obviously, the direction of rotation will depend upon the direction of rotation of the motor which is determined by the user. Rotation of the lead screw 92 results in linear movement of the shaft 94. Once again, the direction of movement of the shaft 94 is dependent upon the direction of rotation of the screw 92. The end of the shaft 94 is attached to the pivot plate 100. Movement of the shaft 94 exerts a force at a corner of the pivot plate 100 which causes the pivot plate 100 to pivot around the fixed pivot 102. This in turn causes rotational movement at the point 104 of the pivot plate 100 which causes the support member and therefore the front edge 42 of the feet to move up or down depending upon the direction of rotation of the screw 92. The method of determining the position of the seat will be substantially as described above, although if the reference holes or marks are provided on the pivot plate, they will be in a substantially circular formation.

Referring to Figure 7 of the drawings, and as shown in Figure 1 of the drawings, the car seat may be provided with a reclining mechanism to provide movement of the back 12 relative to the seat 10, as shown by the arrow at 22. A gear wheel 110 is fixed to the seat 10 at or adjacent the rear edge 40 thereof. A series of irregularly spaced reference holes or marks 112 are provided in a circular formation on the gear wheel 110. The reclining mechanism is once again driven by a motor and gearbox arrangement 114, the operation of which causes rotation of a second gear wheel 116 mounted on the backrest 12. The teeth of the two gear wheels 116, 110 are in communication with each other, such that rotation of the second gear wheel 116 causes corresponding rotation of the backrest 12. The direction of movement of the backrest will once again depend upon the direction of rotation of the motor 114. A sensor (not shown) is attached to the backrest 12 behind the circumference formed by the reference marks or holes 112.

As the backrest is moved, so the sensor moves accordingly and senses any reference holes or marks which it passes during a single adjustment. The position of the backrest 12 is determined accordingly.

Referring to Figures 10, 11 and 12, the mechanism for moving a wing mirror 199 is similar to that used to move the paddles on a lock gate, for example, with a rack and pinion arrangement 204 (see Figure 12). A motor 200 with a position potentiometer 202 attached replaces the handle used in manual adjustment mechanisms. The motor is stationery, and the movement of the rack moves the mirror.

The position potentiometer (pot) is located between the motor 200 and the gearwheel (not shown) which drives the rack.

The present invention provides a system which can determine the position of the mirror by measuring commutation ripples in the motor, as well as identifying fixed reference points located on the rack. Changes in the sensor are observed as the fixed points on the rack move past a sensor (not shown) fixed to the motor.

It will be appreciated that the apparatus and method of the present invention can be applied to any adjustable element, within a vehicle or otherwise.

In the light of this disclosure, modifications of the described embodiment, as well as other embodiments, all within the scope of the present invention as defined by the appended claims, will now become apparent to persons skilled in the art.

## Claims

1. A position determining system for determining the position of an adjustable element, the system comprising means for adjusting said adjustable element, a plurality of reference points, at least one of said reference points being uniquely identifiable, and means for sensing one or more of the reference points and thereby determining the position of said adjustable element.

2. A method of determining the position of an adjustable element, the method comprising the steps of adjusting said adjustable element, providing a plurality of reference points, at least one of said reference points being uniquely identifiable, sensing one or more of the reference points and thereby determining the position of said adjustable element.

3. A method or apparatus according to claim 1 or 2, wherein the reference points comprise a series of apertures or raised bumps.

4. A method or apparatus according to claim 1 or 2, wherein the reference points comprise a series of different coloured reference marks.

5. A method or apparatus according to any one of claims 1 to 4, wherein the reference points are of different sizes.

6. A method or apparatus according to any of the preceding claims wherein the reference points are of different shapes.

7. A method or apparatus according to any of the preceding claims wherein the spacing between the reference points is irregular.

8. A method or apparatus according to any one of the preceding claims, wherein the reference points are provided on the element to be adjusted such that the reference points move with the adjustable element.

9. A method or apparatus according to claim 8, wherein the means for sensing the reference points is mounted in a fixed position relative to the adjustable element.

10. A method or apparatus according to any one of the preceding claims, wherein the reference points are formed on or in a track which is mounted in a fixed position relative to the adjustable element.

11. A method or apparatus according to claim 10, wherein the means for sensing the reference points are provided on the adjustable element for movement therewith relative to the track.

12. A method or apparatus according to claim 10 or claim 11, wherein said track is connected to ground, and said means for sensing comprises a capacitive plate, changes in capacitance between said track and said plate being used to indicate reference points.

13. A method or apparatus according to claim 10 or claim 11, wherein said means for sensing comprises an inductive coil, changes in inductance between said track and said coil being used to indicate reference points.

14. A method or apparatus according to any preceding claim, wherein said reference points comprise a substantially linear series of reference marks or apertures.

15. A method or apparatus according to any one of claims 1 to 13, wherein said reference points comprise a series of marks or apertures in a substantially circular formation.

16. Apparatus according to any one of claims 1 and 3 to 15 when dependent on claim 1 comprising a microcontroller which includes non-volatile memory means for storing the location of the adjustable element after each movement thereof.

17. Apparatus according to claim 16 when dependent upon claim 7, wherein the microcontroller receives signals from said sensing means and determines the distance between the reference points crossed during movement of said adjustable element, thereby determining the position of said adjustable element.

18. Apparatus according to claim 16 when dependent upon claim 7, wherein, if only a single reference point is crossed during movement of said adjustable element, the microcontroller is adapted for determining the position of said adjustable element using the previously stored position and information regarding the direction of movement of said adjustable element.

19. A method or apparatus according to any preceding claim wherein said adjustable element is a seat, a mirror, a steering column, or a computer joystick.
